# EUROPÄISCHE PATENTSCHRIFT

(11) **EP 2 071 325 B1**
(45) Veröffentlichungstag und Bekanntmachung des Hinweises auf die Patenterteilung: **08.06.2016**
(21) Anmeldenummer: 08171018.8
(22) Anmeldetag: 09.12.2008
(51) Int. Cl.: G01N 27/28

(54) **Tauchwechselarmatur für einen Sensor**
Submersible exchangeable fitting for a sensor
Armature échangeable immergée pour un capteur

(30) Priorität: 10.12.2007 DE 102007059668
(43) Veröffentlichungstag der Anmeldung: 17.06.2009
(73) Patentinhaber: Endress + Hauser Conducta GmbH+Co. KG, 70839 Gerlingen (DE)
(72) Erfinder: Schlereth, Rainer, 41469 Neuss (DE); Oppermann, Hans-Joachim, 74376 Gemmrigheim (DE)
(74) Vertreter: Andres, Angelika Maria

(56) Entgegenhaltungen:
- EP-A1- 0 372 121
- EP-A1- 1 752 763
- DE-A1- 10 241 833
- DE-A1-102005 036 865
- DE-U1- 8 633 674

## Beschreibung

Die Erfindung betrifft eine Tauchwechselarmatur für einen ein Fluid enthaltenden Prozessbehälter zum Messen von Prozessgrößen des Fluides, mit einem Armaturengehäuse mit Tauchrohr, einem im Tauchrohr in Richtung dessen Längsachse verschieblich gelagerten und aus dem Tauchrohr in das Fluid herausschiebbaren Hubrohr, und einem im Hubrohr angeordneten, eine Elektrode aufnehmenden rohrförmigen Sensorhalter, welcher an seinem freien, im Hubrohr sich befindenden Ende offen ist, so dass das Fluid über Durchbrüche des Hubrohrs an die Elektrode herangeführt werden kann.

Wechselarmaturen sind in der Analysemesstechnik weit verbreitet. Sie dienen dazu, Prozessgrößen von in Behältern sich befindenden oder strömenden Fluiden zu überwachen. Mit diesen Tauchwechselarmaturen können Sensoren oder Elektroden ohne Prozessunterbrechung selbst bei Prozessdrücken bis zu 10 bar und mehr aus dem Prozess oder Fluid entnommen und anschließend wieder in den Prozess eingeführt werden. Der Sensor wird hierzu mittels des Hubrohres manuell oder automatisch zwischen einer Messposition und einer Serviceposition verfahren. In der Serviceposition kann der Sensor überprüft, kalibriert, gereinigt oder ausgetauscht werden. Aus der DE 10 2006 010 810 A1 ist eine derartige Wechselarmatur bekannt, bei der der rohrförmige Sensorhalter relativ weit in das zu überwachende Medium eingeführt werden kann. Als problematisch erweist sich oftmals das weit vom Prozessbehälter abstehende Armaturengehäuse, in welchem die Servicekammer für den Sensor vorgesehen ist.

Es sind auch Wechselarmatur bekannt, bei denen sich die Servicekammer im Tauchrohr befindet, so dass der Sensorhalter nicht mehr vollständig, d.h. bis in das Armaturengehäuse in seine Serviceposition zurückgezogen werden muss. Das Hubrohr wird lediglich noch in das Tauchrohr eingezogen. Um den Sensor vom Prozessmedium zu trennen, so dass er gereinigt und kalibriert werden kann, oder um ihn aus dem Sensorhalter entnehmen zu können, bedarf es einer optimalen Abdichtung zwischen dem Hubrohr und dem Tauchrohr. Für einen Entnahme und einen Austausch des Sensors ist jedoch eine vollständige oder zumindest eine teilweise Demontage des Armatur, insbesondere ein vollständiger Ausbau des Tauchrohres erforderlich, so dass der Sensor entnommen werden kann. Oder es muss das Hubrohr vollständig aus dem Tauchrohr herausgezogen werden können, wobei das Tauchrohr an seiner im Fluid sich befindenden Seite abgedichtet sein muss. Dieser Vorgang ist nicht nur zeitaufwändig sondern bedarf auch spezieller Vorkehrungen an der Armatur.

EP1752763 offenbart eine fachübliche Wechselarmatur, bei der das Hubrohr gleichzeitig den Sensorhalter repräsentiert, der mit einem einstückigen Adapter an das Antriebsgehäuse angeschlossen ist.

DE10241833 offenbart eine Wechselarmatur, bei der die Elektrode durch ein Verschlussglied im Hubrohr, das gleichzeitig den Sensorhalter darstellt, federnd fixiert werden kann.

Die DE 8633674 U1 offenbart eine Elektrodenhalterung bei der eine Elektrodeneichung und -reinigung durchgeführt werden kann, ohne dass die Elektrode ausgebaut werden muss.

Der Erfindung liegt die Aufgabe zugrunde, eine Tauchwechselarmatur bereitzustellen, bei der ohne vollständige oder teilweise Demontage der Armatur oder ohne Entnahme des Hubrohres der Sensor entnommen werden kann.

Diese Aufgabe wird mit einer Tauchwechsetarmatur der eingangs genannten Art dadurch gelöst, dass ein Adapter lösbar am Sensorhalter befestigt ist, und dass der Adapter mehrteilig ist und die Teile trennbar und hintereinander angeordnet sind.

Mit der erfindungsgemäßen Tauchwechselarmatur wird der wesentliche Vorteil erzielt, dass weder die gesamte Tauchwechselarmatur vom Prozessbehälter entfernt noch das Tauchrohr aus dem Prozessbehälter oder das Hubrohr aus dem Tauchrohr gezogen werden müssen. Vielmehr kann das Hubrohr in seiner Serviceposition verleiben und dichtet in dieser Position das Tauchrohr gegenüber dem Prozessmedium, das heißt dem im Prozessbehälter sich befindenden Fluid ab. In dieser Position (Serviceposition) des Hubrohres kann die Elektrode nicht nur gereinigt und kalibriert sondern mittels des Adapters der Sensorhalter auch herausgezogen werden, so dass die Elektrode ausgetauscht werden kann. Da der Adapter aus dem freien, außerhalb des Prozessbehälters sich befindenden Endes des Hubrohres herausragt, kann er problemlos ergriffen und mit ihm der Sensorhalter herausgezogen werden, da sich am anderen Ende der Sensorhalter mit der darin sich befindenden Elektrode befindet. Hierfür bedarf es keines Spezialwissens der Bedienperson und der Vorgang kann, wie eine Kalibrierung der Elektrode, während des Prozesses durchgeführt werden.

Bei einem bevorzugten Ausführungsbeispiel ist der Adapter rohrförmig ausgebildet und nimmt die Kabel der Elektrode auf. Der Adapter muss also nicht mit speziellen Kabeln und Anschlüssen versehen sein und ist daher individuell für alle Elektroden verwendbar. Da er rohrförmig ausgebildet sein kann, insbesondere als dünnwandiges Rohr, weist er zwar eine hohe Steifigkeit auf, besitzt jedoch ein geringes Gewicht. Außerdem kann der Adapter ohne Beschädigung der Kabel gedreht und an den Sensorhalter angeschraubt werden.

Mit Vorzug erstreckt sich der Adapter koaxial zum Sensorhalter. Auf diese Weise dient der Adapter auch zur Führung des Sensorhalters innerhalb des Tauchrohrs. Mit dem Adapter können auch Druckkräfte auf den Sensorhalter aufgebracht werden, um diesen z.B. in Dichtungen einschieben zu können. Da der Adapter lösbar am Sensorhalter befestigt ist, kann dieser für den Austausch der Elektrode zum Beispiel mit einem bereits mit einer neuen Elektrode bestückten Sensorhalter verbunden werden. Hierdurch wird die Servicezeit auf ein Minimum reduziert. Außerdem kann der Adapter mit unterschiedlichen Sensorhaltern, z.B. unterschiedlicher Länge oder für verschiedene Elektroden, bestückt werden.

Eine einfache Ausführungsform sieht vor, dass der Adapter am Sensorhalter angeschraubt, insbesondere auf diesen aufgeschraubt, ist. Diese Variante erlaubt es auch, den Adapter nach dem Einsetzen des Sensorhalters in das Tauchrohr wieder abzuschrauben und zu entfernen, falls dies gewünscht sein sollte. Eine andere Variante sieht vor, dass der Adapter und der Sensorhalter mittels einer Bajonettverriegelung miteinander verbunden sind.

Um auch den Adapter gegen ausdringendes Fluid abdichten zu können, ist erfindungsgemäß vorgesehen, dass die Außenkontur, insbesondere der Außendurchmesser des Adapters der Außenkontur, insbesondere dem Außendurchmesser des Sensorhalters, entspricht. Auf diese Weise kann der Adapter mit den gleichen Dichtungen wie der Sensorhalter abgedichtet werden.

Bei einer anderen Variante kann der Außendurchmessers des Adapters auch geringfügig größer sein als der Außendurchmesser des Sensorhalters. Hierdurch wird die Entnahme des Sensorhalters erleichtert, da der Sensorhalter nicht durch Dichtungen für den Adapter behindert wird. Insbesondere dann, wenn das Hubrohr an seiner Innenwand mit Dichtungen versehen ist, gehen Sensorhalter und Adapter absatz- oder nutfrei ineinander über. Hierdurch werden beim Ausbau des Sensorhalters die Dichtungen geschont, da keine scharfen Kanten über die Dichtungen streifen.

Bevorzugt kann der Adapter zwar biegeschlaff aber torsions- und drucksteif sein. Hierdurch wird der Vorteil erzielt, dass bei sehr langen Tauchrohren oberhalb der Armatur nur wenig Raum benötigt wird, da der Adapter beim Herausziehen des Sensorhalters nicht koaxial zur Armatur und zum Tauchrohr nach außen abragt.

Eine andere Variante sieht vor, dass der Adapter mehrteilig ausgeführt ist und die Teile hintereinander angeordnet sind. Hierdurch wird der wesentliche Vorteil erzielt, dass insbesondere bei sehr großen Tauchtiefen der Sensorhalter auch dann entnommen werden kann, wenn oberhalb der Armatur nur wenig Raum zur Verfügung steht. In diesem Falle wird der Adapter immer um die Teilstücke herausgezogen und anschließend werden die Teilstücke voneinander getrennt, so dass das nächste Teilstück herausgezogen werden kann. Oberhalb der Armatur ist dann lediglich noch Platz für das längste Teilstück erforderlich. Mit Vorzug sind die Teilstücke ineinander geschraubt.

Um den Adapter am Hubrohr auf einfache Weise befestigen zu können, weist der Adapter an seinem äußeren Ende eine Außenschulter auf und ist mittels einer Überwurfmutter am Hubrohr festgeschraubt, insbesondere auf dieses aufgeschraubt. Das freie äußere Ende des Hubrohrs weist hierfür ein Außengewinde auf. Die Überwurfmutter kann bevorzugt von Hand gelöst werden, so dass der Wechsel der Elektrode ohne Werkzeug durchgeführt werden kann.

Weitere Vorteile, Merkmale und Einzelheiten der Erfindung ergeben sich aus den Unteransprüchen sowie der nachfolgenden Beschreibung, in der ein in der Zeichnung dargestelltes, bevorzugtes Ausführungsbeispiel im Einzelnen beschrieben ist. Dabei können die in der Zeichnung dargestellten sowie in den Ansprüchen und in der Beschreibung erwähnten Merkmale jeweils einzeln für sich oder in beliebiger Kombination erfindungswesentlich sein.

In der Zeichnung zeigen:
- Figur 1: eine Seitenansicht der erfindungsgemäßen Tauchwechselarmatur mit in das Tauchrohr eingezogenem, in der Serviceposition sich befindendem Hubrohr;
- Figur 2: die Seitenansicht gemäß Figur 1, mit aus dem Tauchrohr ausgeschobenem, in Arbeitsposition sich befindendem Hubrohr;
- Figur 3: einen Längsschnitt durch ein mehrteiliges Hubrohr,; und
- Figur 4: einen Längsschnitt durch einen mit einer Elektrode bestückten Sensorhalter mit Adapter.

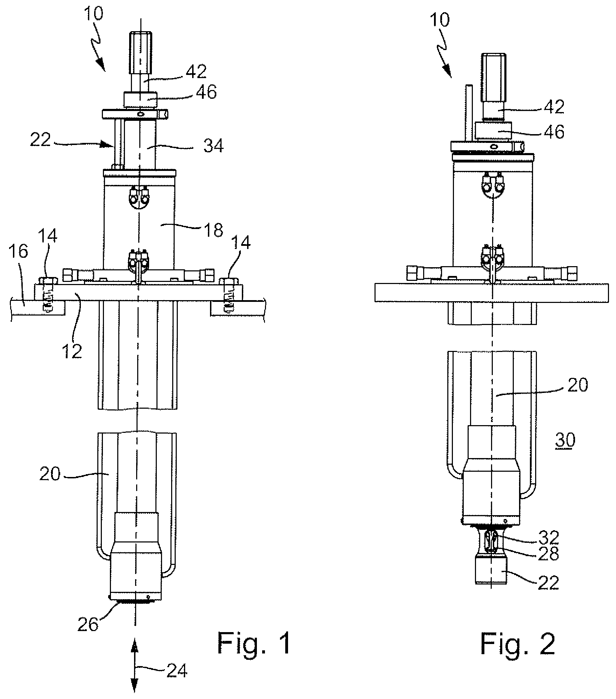

Die Figur 1 zeigt eine Seitenansicht einer bevorzugten Ausführungsform einer Tauchwechselarmatur 10, die mittels eines Flansches 12 zum Beispiel über Schrauben 14 an einem schematisch dargestellten Prozessbehälter 16 befestigt ist. Die Tauchwechselarmatur 10 besitzt ein Armaturengehäuse 18, in welches behälterseitig ein Tauchrohr 20 eingesetzt ist. Dieses Tauchrohr 20 kann eine Länge bis zu vier Metern besitzen und endet an der zu überwachenden Stelle im Prozessbehälter 16. Innerhalb des Tauchrohrs 20 ist ein Hubrohr 22 in Längsrichtung (Pfeil 24) verschieblich gelagert, wobei in der Figur 1 das Hubrohr 22 seine Serviceposition einnimmt und mit seinem freien Ende 26 in das freie Ende des Tauchrohrs 20 eingefahren ist.

In der Figur 2 nimmt das Hubrohr 22 seine Arbeitslage ein und überragt das freie Ende des Tauchrohrs 20 derart, dass Durchbrüche 28 von einem im Prozessbehälter 16 sich befindenden Fluid 30 durchströmt werden können. Die Durchbrüche 28 geben die Sicht frei auf die Spitze einer Elektrode 32, welche Prozessdaten des Fluids 30 ermittelt, z.B. den pH-Wert, den Sauerstoffgehalt, die Temperatur usw..

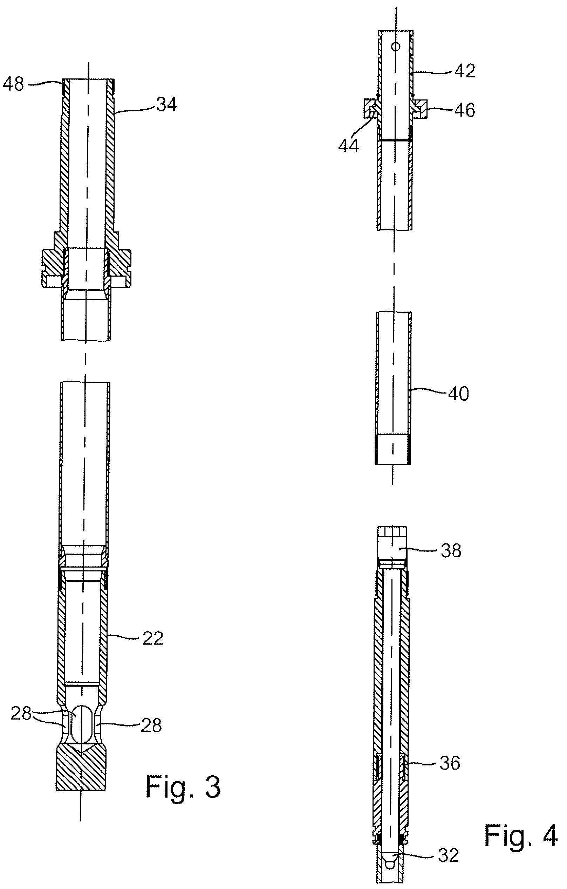

Die Figur 3 zeigt einen Längsschnitt durch das Hubrohr 22, in dem auch die Durchbrüche 28 erkennbar sind. Das Hubrohr 22 ragt mit seinem entgegengesetzten freien (oberen) Ende 34 aus dem Armaturengehäuse 18 heraus, was aus Figur 1 erkennbar ist.

Die Figur 4 zeigt die Elektrode 32, die in einem Sensorhalter 36 dadurch befestigt ist, dass ihr oberes Ende 38 in den Sensorhalter 36 eingeschraubt ist. Alternativ kann die Elektrode 32 auch in den Sensorhalter 36 eingerastet sein. Auf den Sensorhalter 36 ist ein Adapter 40 axial aufgeschraubt und überragt mit seinem freien, oberen Ende 42 das Hubrohr 22, wie aus den Figuren 1 und 2 erkennbar. Dieses freie Ende 42 besitzt eine nach außen abragende Schulter 44 oder einen umlaufenden Flansch, welche(r) von einer Überwurfmutter 46 übergriffen ist, so dass der Adapter 40 auf das freie Ende 34, insbesondere auf ein Außengewinde 48 des Hubrohrs 22 aufgeschraubt werden kann. Der Sensorhalter 36 ist dann vollständig in das Hubrohr 22 eingesetzt, so dass sich die Spitze der Elektrode 32 zwischen den Durchbrüchen 28 befindet, was aus Figur 2 ersichtlich ist. Wird das Hubrohr 22 in Richtung des Pfeils 24 bewegt, dann wird der Adapter 40 mit daran befestigtem Sensorhalter 36 mitbewegt. Das Hubrohr 22 und der Adapter 40 sind gebrochen dargestellt, da sie eine Länge von bis zu vier Metern aufweisen können.

Die Länge des Adapters 40 ist einstellbar, so dass sie exakt an die Längen von Hubrohr 22 und Sensorhalter 36 angepasst werden kann. Geringfügige Längendifferenzen kann mittels der Überwurfmutter 46 ausgeglichen werden.

Soll die Elektrode 32 aus der Tauchwechselarmatur 10 ausgebaut werden, dann wird das Hubrohr 22 in die in der Figur 1 dargestellte Serviceposition in das Tauchrohr 20 eingezogen und verschließt dessen freies, unteres Ende, so dass aus dem Prozessbehälter 16 kein Fluid in das Tauchrohr 20 eindringen kann. Anschließend wird die Überwurfmutter 46 gelöst, so dass der Adapter 40 zusammen mit dem Sensorhalter 36 und der Elektrode 32 nach oben aus dem Hubrohr 22 herausgezogen und aus dem Hubrohr 22 entfernt werden kann. Gegebenenfalls kann, insbesondere bei großen Längen des Hubrohrs 22, der Adapter 40 aus mehreren axial hintereinander angeordneten und miteinander verschraubten Teilstücken bestehen. Diese werden dann beim Herausziehen des Adapters 40 sukzessive zerlegt. Alternativ kann der Adapters 40 auch biegeschlaff, aber torsions-, zug- und drucksteif ausgeführt sein.

Die erfindungsgemäße Tauchwechselarmatur 10 hat den wesentlichen Vorteil, dass der Sensorhalter 36 mit der darin sich befindenden Elektrode 32 problemlos aus dem Hubrohr 22 entfernt werden kann, ohne dass die Tauchwechselarmatur 10 vom Prozessbehälter 18 gelöst oder das Tauchrohr 20 aus dem Prozessbehälter 16 entfernt werden muss.

## Patentansprüche

1. Tauchwechselarmatur (10) für einen ein Fluid enthaltenden Prozessbehälter (16) zum Messen von Prozessgrößen des Fluides, mit einem Armaturengehäuse (18) mit Tauchrohr (20), einem im Tauchrohr (20) in Richtung dessen Längsachse verschieblich gelagerten und aus dem Tauchrohr (20) in das Fluid herausschiebbaren Hubrohr (22), und einem im Hubrohr (22) angeordneten, eine Elektrode (32) aufnehmenden rohrförmigen Sensorhalter (36), welcher an seinem freien, im Hubrohr (22) sich befindenden Ende offen ist, so dass das Fluid über Durchbrüche (28) des Hubrohrs (22) an die Elektrode (32) herangeführt werden kann, wobei der Sensorhalter (36) mittels eines Adapters (40) bis über das freie, außerhalb des Prozessbehälters (16) sich befindende Ende (34) des Hubrohres (22) verlängert ist,
**dadurch gekennzeichnet, dass**
der Adapter (40) lösbar am Sensorhalter (36) befestigt ist, und dass
der Adapter (40) mehrteilig ist und die Teile trennbar und hintereinander angeordnet sind.

2. Tauchwechselarmatur nach Anspruch 1, **dadurch gekennzeichnet, dass** der Adapter (40) rohrförmig ist und Kabel der Elektrode (32) aufnimmt.

3. Tauchwechselarmatur nach einem der vorhergehenden Ansprüche, **dadurch gekennzeichnet, dass** der Adapter (40) sich koaxial zum Sensorhalter (36) erstreckt.

4. Tauchwechselarmatur nach Anspruch 1, **dadurch gekennzeichnet, dass** der Adapter (40) am Sensorhalter (36) angeschraubt, insbesondere auf diesen aufgeschraubt ist.

5. Tauchwechselarmatur nach einem der vorhergehenden Ansprüche, **dadurch gekennzeichnet, dass** der Adapter (40) zwar biegeschlaff aber torsions-, zug- und drucksteif ist.

6. Tauchwechselarmatur nach einem der vorhergehenden Ansprüche, **dadurch gekennzeichnet, dass** die Außenkontur, insbesondere der Außendurchmesser des Adapters (40) der Außenkontur, insbesondere dem Außendurchmesser des Sensorhalters (36) entspricht.

7. Tauchwechselarmatur nach einem der vorhergehenden Ansprüche, **dadurch gekennzeichnet, dass** Sensorhalter (36) und Adapter (40) absatzfrei ineinander übergehen.

8. Tauchwechselarmatur nach einem der vorhergehenden Ansprüche, **dadurch gekennzeichnet, dass** der Adapter (40) an seinem äußeren Ende (42) eine Außenschulter (44) aufweist und mittels einer Überwurfmutter (46) am Hubrohr (22) angeschraubt ist.

## Claims

1. Retractable immersion assembly (10) for a process vessel (16) containing a fluid, said process vessel being used to measure process variables of the fluid, with an assembly housing (18) with an immersion tube (20), a retraction pipe (22) which is mounted in the immersion tube (20) and be can moved in the direction of its longitudinal axis and which can be slid out of the immersion tube (20) and into the fluid, and a tubular sensor holder (36) arranged in the retraction pipe (22) and holding an electrode (32), said sensor holder being open at its free end located in the retraction pipe (22) in such a way that the fluid can be directed to the electrode (32) via openings (28) in the retraction pipe (22), wherein the sensor holder (36) is extended to over the free end (34) of the retraction pipe (22), which is located outside the process vessel (16) by means of an adapter (40),
**characterized in that**
the adapter (40) is detachably secured to the sensor holder (36), and
the adapter (40) is a multi-part adapter and the parts are separable and are arranged one behind the other.

2. Retractable immersion assembly as claimed in Claim 1, **characterized in that** the adapter (40) is tubular and holds the cable of the electrode (32).

3. Retractable immersion assembly as claimed in one of the previous claims, **characterized in that** the adapter (40) extends in a coaxial manner to the sensor holder (36).

4. Retractable immersion assembly as claimed in Claim 1, **characterized in that** the adapter (40) is partially screwed onto the sensor holder (36), particularly fully screwed onto the sensor holder (36).

5. Retractable immersion assembly as claimed in one of the previous claims, **characterized in that** while the adapter (40) is non-rigid, it is resistant to torsion, tension and pressure.

6. Retractable immersion assembly as claimed in one of the previous claims, **characterized in that** the outer contour, particularly the outer diameter of the adapter (40) of the outer contour, corresponds in particular to the outer diameter of the sensor holder (36).

7. Retractable immersion assembly as claimed in one of the previous claims, **characterized in that** the sensor holder (36) and the adapter (40) merge into one another without any interruptions.

8. Retractable immersion assembly as claimed in one of the previous claims, **characterized in that** the adapter (40) has an outer shoulder (44) at its outer end (42) and is screwed onto the retraction pipe (22) by means of a union nut (46).

## Revendications

1. Sonde rétractable d'immersion (10) pour un réservoir de process (16) contenant un fluide, laquelle sonde est destinée à la mesure de grandeurs process du fluide, comprenant un boîtier de sonde (18) avec tube d'immersion (20), un tube de levage (22) logé dans le tube d'immersion (20) de manière à pouvoir être coulissé en direction de son axe longitudinal et pouvant être retiré du tube d'immersion (20) et immergé dans le fluide, et un support de capteur (36) tubulaire supportant une électrode (32) et disposé dans le tube de levage (22), lequel support est ouvert en son extrémité libre située dans le tube de levage (22), de telle sorte que le fluide puisse être acheminé jusqu'à l'électrode (32) par l'intermédiaire d'ouvertures (28) du tube de levage (22), le support de capteur (36) étant rallongé au moyen d'un adaptateur (40) jusqu'au-dessus de l'extrémité (34) libre, située en dehors du réservoir de process (16), du tube de levage (22),
**caractérisé**
**en ce que** l'adaptateur (40) est fixé de façon amovible sur le support de capteur (36), et
**en ce que** l'adaptateur (40) est constitué de plusieurs pièces et en ce que les pièces sont disposées les unes derrière les autres de manière à pouvoir être séparées.

2. Sonde rétractable d'immersion selon la revendication 1, **caractérisée en ce que** l'adaptateur (40) est de forme tubulaire et supporte le câble de l'électrode (32).

3. Sonde rétractable d'immersion selon l'une des revendications précédentes, **caractérisée en ce que** l'adaptateur (40) s'étend de façon coaxiale jusqu'au support de capteur (36).

4. Sonde rétractable d'immersion selon la revendication 1, **caractérisée en ce que** l'adaptateur (40) est vissé partiellement sur le support de capteur (36), notamment vissé complètement sur le support de capteur (36).

5. Sonde rétractable d'immersion selon l'une des revendications précédentes, **caractérisée en ce que** l'adaptateur (40) est certes flexible, mais résistant à la torsion, à la traction et à la pression.

6. Sonde rétractable d'immersion selon l'une des revendications précédentes, **caractérisée en ce que** le contour extérieur, notamment le diamètre extérieur de l'adaptateur (40), correspond au contour extérieur, notamment au diamètre extérieur du support de capteur (36).

7. Sonde rétractable d'immersion selon l'une des revendications précédentes, **caractérisée en ce que** le support de capteur (36) et l'adaptateur (40) s'intègrent l'un dans l'autre sans palier.

8. Sonde rétractable d'immersion selon l'une des revendications précédentes, **caractérisée en ce que** l'adaptateur (40) présente sur son extrémité extérieure (42) un épaulement extérieur (44) et est vissé sur le tube de levage (22) au moyen d'un écrou-raccord (46).
